# EUROPEAN PATENT SPECIFICATION

(11) **EP 3 148 933 B1**
(45) Date of publication and mention of the grant of the patent: **11.04.2018**
(21) Application number: 15763371.0
(22) Date of filing: 17.09.2015
(51) Int. Cl.: C01B 32/192

(54) **METHODS FOR PRODUCING GRAPHENE WITH TUNABLE PROPERTIES BY A MULTI-STEP THERMAL REDUCTION PROCESS**
VERFAHREN ZUR HERSTELLUNG VON GRAPHEN MIT ABSTIMMBAREN EIGENSCHAFTEN DURCH EIN MEHRSTUFIGES WÄRMEREDUKTIONSVERFAHREN
PROCÉDÉ DE PRODUCTION DE GRAPHÈNE AYANT DES PROPRIÉTÉS MODULABLES PAR UN PROCESSUS DE RÉDUCTION THERMIQUE EN PLUSIEURS ÉTAPES

(30) Priority: 18.09.2014 EP 14382352
(43) Date of publication of application: 05.04.2017
(73) Proprietor: Repsol, S.A., 28045 Madrid (ES)
(72) Inventor: PÁEZ DUEÑAS, Antonio, 28935 Móstoles (ES); GARCÍA SAN LUIS, Jesús, 28935 Móstoles (ES); ÁLVAREZ RODRÍGUEZ, Patricia, 33080 Oviedo (ES); GRANDA, Marcos, 33080 Oviedo (ES); BLANCO RODRÍGUEZ, Clara, 33080 Oviedo (ES); SANTAMARÍA RAMÍREZ, Ricardo, 33080 Oviedo (ES); BLANCO, Patricia, 33080 Oviedo (ES); FERNÁNDEZ, Laura, 33080 Oviedo (ES); MENÉNDEZ LÓPEZ, Rosa María, 33080 Oviedo (ES); CALLE GÓMEZ, Fernando, 28040 Madrid (ES)
(74) Representative: Balder IP Law, S.L.
(86) International application number: PCT/EP2015/071367
(87) International publication number: WO 2016/042099

(56) References cited:
- US-A1- 2009 026 086
- US-A1- 2010 055 458
- US-A1- 2011 157 772
- ANGELA D. LUEKING ET AL: "Effect of Expanded Graphite Lattice in Exfoliated Graphite Nanofibers on Hydrogen Storage", THE JOURNAL OF PHYSICAL CHEMISTRY B, vol. 109, no. 26, 1 July 2005 (2005-07-01) , pages 12710-12717, XP055058844, ISSN: 1520-6106, DOI: 10.1021/jp0512199
- PEI SONGFENG ET AL: "The reduction of graphene oxide", CARBON, vol. 50, no. 9, 16 November 2011 (2011-11-16), pages 3210-3228, XP028915234, ISSN: 0008-6223, DOI: 10.1016/J.CARBON.2011.11.010
- ZHANG CHEN ET AL: "Towards low temperature thermal exfoliation of graphite oxide for graphene production", CARBON, vol. 62, 31 May 2013 (2013-05-31), pages 11-24, XP028678176, ISSN: 0008-6223, DOI: 10.1016/J.CARBON.2013.05.033

## Description

### FIELD OF THE INVENTION

The present invention relates to the field of industrial methods of preparing graphenes and in particular to a new multi-step process for preparing graphene with controlled characteristics by thermal exfoliation/reduction of graphite oxide.

### BACKGROUND OF THE INVENTION

Graphene and graphene-based materials have attracted a great deal of interest due to their fascinating properties and potential applications (Park S, Ruoff, RS. Nat Nanotechnol 2009; 4: 217-24). The exfoliation of graphite oxide to yield graphene oxide followed by a reduction process offers a simple method to obtain graphene (Marcano DC, Kosynkin DV, Berlin JM, Sinitskii A, Sun Z, Slesarev A, et al. ACS Nano 2010; 4: 4806-14; and Gao X, Jang J, Nagase S. J Phys Chem C 2010; 114: 832-42). This method has the advantage of being readily scalable and also has the ability to produce graphene materials with a tuneable amount of oxygen, depending on the characteristics of the parent graphite (Botas C, Álvarez P, Blanco C, Santamaría R, Granda M, Ares P, et al. Carbon 2012; 50: 275-82) and of the experimental conditions of both oxidation and reduction (Stankovich S, Dikin DA, Piner RD, Kohlhaas KA, Kleinhammes A, Jia Y, et al. Carbon 2007; 45: 1558-65). Other important properties, such as specific surface, cannot however be tuned. Several processes have been considered for the reduction of graphene oxide. These include: i) chemical reduction with different reagents, hydrazine being the most common (Menéndez, R. et al.. RSC Adv., 2012,2, 9643-9650); ii) thermal reduction which can be microwave assisted or performed in different atmospheres (argon, vacuum, hydrogen, hydrogen/argon) (Kaniyoor, A, Baby TT, Arockiadoss T, Rajalakshmi N, Ramaprabhu S., J Phys Chem C 2011; 115: 17660-9); iii) electrochemical reduction (Sundaram RS, Gomez-Navarro C, Balasubramanian K, Burghard M, Kern K., Adv Mater 2008; 20: 3050-3) and iv) a combination of different methods, such as chemical reduction/thermal annealing or thermal reduction/hydrogenation.

In the case of the thermal reduction it should be taken into account that the process is a thermal decomposition of the graphene oxide in which the bound oxygen is liberated in form CO and CO₂, that are oxidation products of carbon, and the remaining carbon is reduced. The thermal exfoliation/reduction of graphite oxide is an interesting alternative to chemical reduction for the preparation of graphene materials because of: i) its simplicity, since the exfoliation of the graphite oxide to produce graphene oxide and its thermal reduction to graphene occurs all in one step; ii) its sustainability, since it avoids the use of environmentally unfriendly chemicals; and iii) its scalability. However, the efficiency with which graphene single sheets can be prepared by the thermal expansion of graphite oxide and the quality of the graphene sheets is dependent on the degree of oxidation of the graphite and the conditions of the thermal treatment. One of the requirements is to build up enough pressure during heat treatment stages (McAllister MJ, Li JL, Adamson DH, Schniepp HC, Abdala AA, Liu J, et al., Chem Mater 2007; 19: 4396-404).

There are several methods described in the literature to produce the thermal treatment of graphite oxides. Most of them are focused on the control of the reduction degree of the graphenes obtained, main objective of the treatment. However, for certain applications, it is not only a requirement to obtain a reduction degree (essential property) but also to control other properties for this specific graphene reduced up to the desired temperature. This is the case of the surface area, essential property in applications such as energy storage devices (e.g. batteries, capacitors), or the solubility properties, which must be enhanced for catalytic applications.

Most of the treatments described in the literature focus on the thermal heating of the graphene sample in a single step up to the desired temperature. Most of the examples also suggest (or even analyze) that by modifying the final temperature of the single-stage treatment the reduction degree of the obtained graphene can be controlled. This documents are however silent about other important properties (e.g. BET surface area or processability issues). This is the case of the Rapid heating (on a hot plate) to a temperature of 400°C in a single step, which has been used to obtain bulk quantities of single functionalized graphene sheets from a flake graphite oxide, and which showed problems of processability (Potts, J, et al. Composites science and technology 74 (2013) 166-172). Menéndez, R. et al., in Carbon 52 (2013) 476-485 describe the thermal exfoliation/reduction of oxide graphite at temperatures of 127°C, 300°C, 400°C, 600°C, 700°C, 800°C and 1000°C using a slow heating rate of 5°C/min with the objective of minimizing distortion of the sheets. The authors have also observed that high heating rates of 30°C/min produced more wrinkled sheets and the exfoliation was lower. In general terms, low BET surface were reported for this methodology. A further example is the thermal flash heating up to 1050°C in a sealed tube (McAllister, M.J. et al., chem. Mater. 2007, 19, 4396-4404), in which graphene with high BET surface area are obtained. No mention about solubility issues is however mentioned.

In any case, the use of a single step does not allow tuning the properties of the graphenes obtained; once the final temperature is fixed, it leads to a fixed properties (C/O ratio, BET surface area, processability issues), without the possibility of controlling them separately.

In an attempt to prepare graphenes with controlled characteristics Zhang et al. (Zhang Y et al. Carbon 54, 2013, 143-148) make use of a sequential thermal treatment consisting of an initial stage of low thermal temperature exfoliation at 700°C using a fast heating ramp (with a heating rate 100°C/min) followed by a second thermal treatment where the reduced graphene oxide sheets are annealed at 1500°C and 40 MPa uniaxial pressures for 5 min in vacuum. The obtained graphenes show a low amount of residual oxygen (no D peak was detected in the Raman spectrum). This graphene is unappropriate for batteries and other devices, were the presence of a certain amount of oxygenated functional groups is beneficial and, additionally, were a larger surface area of the reduced samples and an adequate processability (suspension properties in certain solvents) are also a requirement.

US 2011/0157772 is directed to a process for preparing modified graphene by including spacers in its structure. It discloses a process wherein a graphitic material (fibers) is heated in a preheated furnace at temperature of 600°C for 30 seconds, and subsequently at 1,100°C for 20 minutes.

Angela D. Lueking et al. in Carbon, 2005(vol. 109), pages 12710-12717 discloses process which comprises rapidly heating graphite oxide at 700°C for two minutes, and then heating at 1,000°C for 36h.

Zhang Chen et al in Carbon, 2013(vol. 62), pages 11-24 discuses among other things processes to exfoliate graphite oxide at low temperature under high vacuum.

There is thus a need to provide alternative and improved graphenic materials.

### SUMMARY OF THE INVENTION

The present inventors have now surprisingly found that it is possible to prepare thermally reduced graphene in a controlled manner by way of a new synthetic process. The resulting graphene presents not only a controlled residual oxygenated functional groups portion (direct consequence of the final temperature selected in the treatment) but also a controlled surface area, which relates also with its volume.

Even further, the graphenes obtained by the process of the invention show a surprisingly high capacity to be dispersed in solvents, and thus have an excellent processability.

Among other properties, the obtained graphenes also show very good reconstruction of the carbon structure with temperature, which makes them very appropriate for diverse applications, like in batteries.

Thus, in one aspect the invention relates to a new multi-step process for the preparation of graphene which comprises the following steps:
a) flash thermal treatment under inert atmosphere of a graphite oxide at a temperature up to 700°C sufficient to produce exfoliation;
b) cooling the material obtained in the previous step below 90°C; and
c) heating the material resulting from the previous step under inert atmosphere at a temperature which is higher than the temperature of step a), wherein the heating rate is between 1 and 15°C/min.

### DESCRIPTION OF THE DRAWINGS

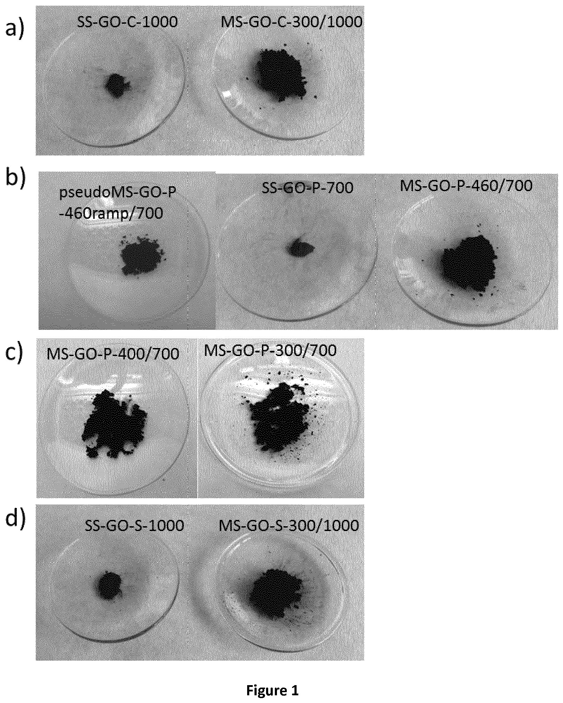

**Figure 1**: Images of different graphene samples obtained by the multi-step thermal process of the invention (MS) and a single-step process (SS). Figure 1a compares the appearance of the MS-GO-C-300/1000 (Example 1) with the appearance of the SS-GO-C-1000 sample (Example 2). Figure 1b compares the appearance of the MS-GO-P-460/700 (Example 3) with the appearance of the SS-GO-P-700 sample (Example 4) and that of the pseudoMS-GO-P-460ramp/700 (example 5). Figure 1c compares the appearance of MS-GO-P-300/700 (example 6) with the appearance of MS-GO-P-400/700 (example 7). Figure 1d compares the appearance of the MS-GO-S-300/1000 (Example 8) with the appearance of the SS-GO-S-1000 sample (Example 9).

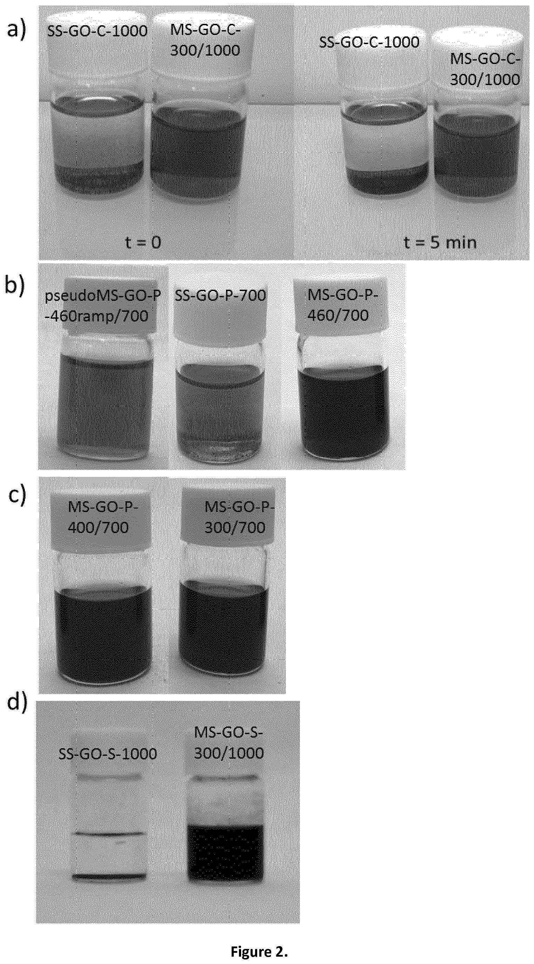

**Figure 2**: Images of different graphene sample suspensions in DMSO obtained by the multi-step thermal process of the invention (MS) and a single-step process (SS). Figure 2a illustrates the suspensions in DMSO at t=0 of SS-GO-C-1000 (left vial) and MS-GO-C-300/1000 (right vial) and the same suspensions after 5 min (t=5). See also Examples 1 and 2. Figure 2b compares the DMSO suspension of the MS-GO-P-460/700 (Example 3) with the DMSO suspension of the SS-GO-P-700 sample (Example 4) and that of the pseudoMS-GO-P-460ramp/700 (example 5). Figure 1c compares the suspension of MS-GO-P-300/700 (example 6) with the DMSO suspension of MS-GO-P-400/700 (example 7). Figure 1d compares the DMSO suspension of the MS-GO-S-300/1000 (Example 8) with the DMSO suspension of the SS-GO-S-1000 sample (Example 9).

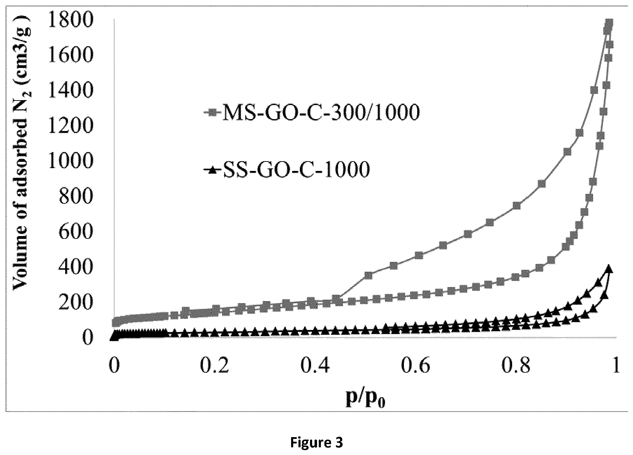

**Figure 3**: Nitrogen adsorption isotherm of MS-GO-C-300/1000 and SS-GO-C-1000. See also Examples 1 and 2.

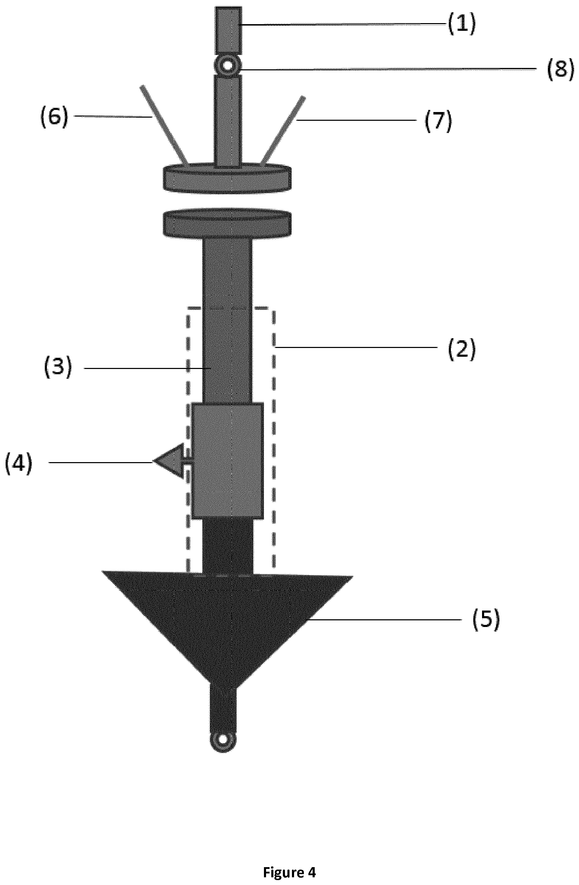

**Figure 4**: shows an embodiment of a reactor of the present invention, for carrying out the step a) of flash thermal treatment of graphite oxide.

### DESCRIPTION OF THE INVENTION

Throughout the present invention graphenes are labeled according to the nomenclature Y-GO-X-T, wherein Y is either SS (single step) or MS (multistep), GO indicates Graphite Oxide. X indicates the origin of the graphite, wherein S indicates "synthetic", C indicates "commercial", CC indicates "combustion coke" and P is "petroleum coke". T indicates the temperature at which graphene is obtained. For single step graphenes (SS), only one temperature is indicated, and for multi-step processes (MS) a first temperature is indicated corresponding to the first heating temperature, followed by "/" and the second heating temperature.

According to a particular embodiment the process for the preparation of graphene further comprises a cooling step a'), between steps a) and b). In another particular embodiment, the process for the preparation of graphene of the present invention comprises:
a) flash thermal treatment of a graphite oxide at a temperature comprised between 90°C and up to 700°C sufficient to produce exfoliation and under inert atmosphere;
b) cooling the material obtained in the previous step at a temperature below 40°C; and
c) heating the material obtained in the previous step above 700°C and up 3000°C under inert atmosphere at a heating rate between 2 and 10°C/min.

The step of cooling the graphene oxide b) is carried out to a temperature below the temperature reached in the previous step a). The cooling temperature may vary always being less than 90°C. Typically, cooling can be done down to ambient temperature. In the present invention ambient temperature refers to a temperature typically below 40°C, for example between 10°C and 30°C.

The term "flash thermal treatment" throughout the present invention is understood as a treatment wherein the sample is put in contact with a system preheated to the temperature indicated. For example, if treated in an oven, the flash thermal treatment according to the present invention comprises heating the entire oven volume to the temperature indicated and then introducing the sample so that is suddenly presented with such temperature.

According to a particular embodiment the flash thermal treatment is carried out at a temperature greater than 90°C, preferably greater than 120°C. Exfoliation does not usually take place in a linear fashion with temperature, but there is typically a critical temperature ("explosion temperature") at which the gases formed by the decomposition of grahite oxide are released suddenly resulting in most of the exfoliation of the material. Different graphite oxides have different explosion temperatures which can be determined by the skilled person. As the temperature of the flash thermal treatment increases with respect to that of the explosion temperature, a graphene with higher BET values is usually obtained. Thus, the process of the invention can lead at will to graphenes with high BET values and low reduction, as well as to graphenes with low BET values and high reduction, while providing at the same time excellent stability of dispersions thereof and processability. In another particular embodiment the flash thermal treatment is carried out at a temperature greater than 300°C, more particularly greater than 450°C. In a particular embodiment the flash thermal treatment is carried out at 460°C. In a further particular embodiment, the temperature in step a) is set between 100 and 700°C, particularly, between 300 and 600°C. In a further particular embodiment, the temperature in step a) is set between 100 and 250°C.

According to a particular embodiment, flash thermal treatment can take place in an especially designed reactor as the one illustrated in Figure 4. This reactor is part of a device for carrying out the process of the invention which constitutes a further aspect of the invention. As explained below, it is especially suited to perform step a) of the present invention. In a further aspect the invention relates to a device comprising a reactor especially designed for carrying out the flash thermal treatment of the graphite oxide. The reactor according to a particular embodiment is represented in Figure 4, wherein the reactor comprises an inlet (1), and inlet valve (8), a preheated volume (2) comprising and oven (3) and a discharge valve (4), heating means (5), a gas inlet (6) and a gas outlet (7).

This reactor allows carrying out step a) of the process of the invention, the exfoliation of graphite oxide into graphene oxide, in a semicontinous mode.

According to an embodiment, said reactor comprises an inlet (1) suitable for the addition of grafite oxide, said inlet (1) being separated from a preheated volume (2), which comprises an oven (3) connected to a discharge valve (4), by an inlet valve (8), and
wherein said heated volume (2) is connected to a gas inlet (6) and a gas outlet (7), and in contact with heating means (5), said discharge valve (4) being connected to discharge means (9) [not shown] where the exfoliated material is recovered, and optionally allowed to cool. The reactor is under inert atmosphere in order in order to avoid undesired fire.

The graphene oxide is introduced in the inlet (1) of the reactor and through the inlet valve (8) reaching the preheated volume (2) where the flash thermal exfoliation takes place. The inventors have observed that in order to achieve an adequate exfoliation, it is important to introduce the graphite oxide in a preheated area, so that the graphite oxide is suddenly submitted to a temperature of up to 700°C. Also the relation between the mass (grams) of graphene oxide introduced in the reactor and the volume (cm³) of the preheated volume (2) can be advantageously controlled. The preheated volume (2) is preheated by conventional means in the oven (3). The nature of said heating means is not critical and typically involves an electric heating system. After the exfoliation, the graphene oxide is discharged through a discharge valve (4) ready to be submitted to steps b) and c). Residence times in the reactor are typically between about 2 and about 10 minutes depending on the applied temperature, in particular about 5 min.

According to a particular embodiment, step c) is carried out at a temperature comprised between 800°C and 2,800°C, more particularly between 900°C and 2500°C, even more particularly between 1000°C and 2000°C. In a further embodiment the temperature of step c) is carried out at a temperature comprised between 400°C and 1200°C, more particularly between 450°C and 1050°C, more particularly between 500°C and 1000°C and even more particularly between 600°C and 1000°C. This step can be carried out in a graphite oven with heating rates that vary between 1 and 15°C/min, more particularly between 2 and 10°C/min, for example 3°C/min, 4°C/min, 5°C/min, 6°C/min or 7°C/min.

The process of the invention is carried under inert atmosphere which may be achieved by introducing any inert gas like N₂, Ne, Ar, etc. In a particular embodiment step a) is carried out under a N₂ atmosphere, with flows between 50 and 300 mL/min, and step c) is carried out in an Ar atmosphere with flows between 2 and 4 L/min.

According to a particular embodiment, the ratio between the preheated volume and the graphite oxide added is comprised between 20-100 cm³/g. Such particular ranges provide the mass of graphite oxide inside the preheated volume of enough space to guarantee optimum exfoliation of the graphite oxide, minimizing the risk of an excessive stacking of the resulting graphene oxide.

In principle, any graphite oxide can be used as starting material in the process of the invention. According to a preferred embodiment, the graphite oxide is prepared from graphite by oxidation. Oxidation can be carried out by any of the well-known methods in the art like the Hummer's method (Hummers WS, Offeman RE. Preparation of graphitic oxide. Journal of the American Chemical Society 1958; 80: 1339-40) or a modified Hummer's method. It can be also prepared by other methodologies such as Brodie method (Brodie BC. Sur le poids atomique du graphite. Annales de chimie et de physique 1860; 59: 466-72), Staudenmaier method (L. Staudenmaier, Ber. Dtsch. Chem. Ges., 1898, 31, 1481), mild oxidation of graphite with different reactant (H₂O₂, etc.)(US patent application 20090028777). In a preferred embodiment, the graphite oxide is prepared by the Hummer's method or any modified Hummer's method, as illustrated in the Examples.

In turn, the graphite can be natural or synthetic graphite. In a particular embodiment the graphite used as starting material is commercial graphite, petrochemical graphite or semisynthetic graphite. The synthetic graphite can be obtained for example by graphitization of carbochemical, petrochemical or synthetic graphitizable carbonaceous precursors, such as coke, pitch or polymerized aromatic compounds. According to a preferred embodiment, graphite is obtained from coke by graphitization.

The graphene of the invention has been characterized by different methods as follows:

### Elemental analysis:

The carbon, hydrogen, sulphur and nitrogen contents of the samples were determined with a LECO-CHNS-932 microanalyzer. The oxygen content was obtained directly using a LECO-VTF-900 furnace coupled to the micro-analyzer. The proximate analysis was carried out following the ASTM D3174-04 Standard Test Method. All of the analyses were made using 1mg of sample ground and sieved to<0.2mm. The results were quoted as a mean of values from four determinations. In all cases, the standard deviation was found to be <0.5% of the absolute value. The results vary within certain ranges depending on facts like the type of graphite oxide used, the type of graphite, the reaction conditions for preparing the graphite oxide, and the thermal treatment temperatures.

Surface BET: The textural characteristics of the different samples were analyzed using N₂ adsorption at 77 K. These analyses were performed in an ASAP 2020 Micromeritics equipment. The measurements were carried out following the ASTM standard D-6556 with a modification: before the experiments, the samples were outgassed at 350°C for 10 h under vacuum (pressure below 10⁻³ Pa), using around 100 mg of sample in each experiment. The apparent surface area was determined from the N₂-adsorption isotherm using the BET equation. The increased surface area of the graphene obtained by the process of the invention has been determined to be at least 100 m²/g, preferably 200 m²/g, more preferably 300 m²/g, even more preferably 400 m²/g and most preferably 500 m²/g.

Stability of dispersion of the graphenes in solvent: stability of dispersions of the different graphenes was evaluated by dispersing 10 mg of the graphene in 10 mL of DMSO at room temperature and 1 atm. After introducing in the ultrasound for 15 min, the suspension was left at room temperature and the presence of precipitate qualitatively evaluated. The corresponding graphene was considered to form stable dispersions if after 5 minutes no appreciable precipitation was observed.

Volume of the sample obtained: For comparative purposes of the volume occupied for a certain amount of graphene, digital images of the volume occupied for 22.5 grams of the obtained graphenes are shown in figure 1.

The graphene of the invention presents among other characteristics, a controlled surface area, mainly as a factor of the temperature of initial flash pyrolysis step, while the subsequent step in ramp to the final temperature required to obtain the reduction desired does increase the surface area but not substantially. As a consequence of the control of the surface area, parameters as the volume occupying the sample or the possibility to disperse the sample in certain solvents are also established. These parameters (and their control) are crucial for diverse applications, like in batteries.

Even further, the graphenes obtainable by the process of the invention can form very stable dispersions in solvents, and therefore provide improved processability compared to other graphenes described in the literature. This is a very important feature for the preparation of pastes of graphene and to form homogeneous mixtures with other components, such as polymers, in order to provide materials with improved properties, a technology area currently of key interest.

For example, such processability can provide improved mixtures with spinels and other fillers in order to prepare improved and more homogeneous materials destined to store energy (e.g. batteries, supercondensers).The following examples are non-limiting and are merely representative of various aspects of the invention.

### EXAMPLES

The present invention will be better understood from the following examples and more specifically by comparing the characterization of the samples produced by the preferred (but not limiting) embodiments of the multi-step procedure developed herein (examples 1, 3, 6, 7 and 8) and those resulted in the characterization of the same set of samples by thermally treatment at up to the same final temperature but by means of standard procedures described in the state of the art and reproduced herein (examples 2, 4, 5 and 9).

### Example 1 (according to the invention): Preparation of graphene from commercial graphite with a first flash thermal treatment at 300°C and a second thermal treatment at 1000°C (MS-GO-C-300/1000)

MS-GO-300/1000 was prepared by using as starting material a graphite oxide (GO-C) prepared from a commercial graphite using the modified Hummers' method described below.

### Preparation of Graphite Oxide

This method makes use of the Hummers' reagents with additional amounts of NaNO₃ and KMnO₄. Concentrated H₂SO₄ (360 mL) was added to a mixture of graphite (7.5 g) and NaNO₃ (7.5 g), and the mixture was cooled down to 0°C by means of an ice bath. KMnO₄ (45 g) was added slowly in small doses to keep the reaction temperature below 20°C. The solution was heated up to 35°C and stirred for 3 h, at which point 3 % H₂O₂ (1.5 L) was slowly added, giving rise to a pronounced exothermal effect up to 98°C. The reaction mixture was stirred for 30 min and, finally, the mixture was centrifuged (3700 rpm for 30 min), the supernatant being decanted away. The remaining solid material was then washed with 600 mL of water and centrifuged again, this process being repeated until the pH was neutral.

### Preparation of MS-GO-C-300/1000

In a first step of flash thermal treatment, 0.3 g of GO-C were introduced in an oven having a volume of 25 cm³ previously heated at 300°C under an atmosphere of N₂ (100 mL min⁻¹). The sample was then allowed to cool to room temperature. In a second step of thermal treatment the sample previously obtained was introduced in an oven and heated up to 1000°C under an atmosphere of Ar (3 L min⁻¹) at a heating rate of 5°C min⁻¹ to 700°C, the sample being kept at this temperature for 1 h. The sample so obtained was labeled as MS-GO-C-300/1000.

### Characterization of MS-GO-C-300/1000

The obtained sample exhibits a fluffy appearance (Figure 1a right). The suspension of MS-GO-C-300/1000 in DMSO is homogeneous and stable after 5 min (Figure 2, right sample on both pictures). The SBET surface area calculated for this sample was ≈430 m²g⁻¹ (Table 1). The C/O ratio, calculated by elemental analysis, is 130 (Table 1), well in the range of the samples thermally treated at 1000°C, but with a very high SBET and excellent stability in dispersion.

### Example 2 (comparative): Preparation of graphene from commercial graphite by a single-step thermal treatment at 1000°C with heating rate of 5°C/min (SS-GO-C-1000)

### Preparation of SS-GO-C-1000

SS-GO-C-1000 was prepared by using as starting material the graphite oxide (GO-C) prepared in example 1. GO was thermally treated in an oven and heated up to 1000°C under an atmosphere of Ar (3 L min⁻¹) at a heating rate of 5°C/min, the sample being kept at this temperature for 1 h. The sample was labeled as SS-GO-C-1000.

### Characterization of SS-GO-C-1000

SS-GO-C-1000 exhibits an appearance completely different form MS-GO-C-300/1000 (Figure 1a, left sample). The image illustrates the volume occupied for 22.5 mg of each sample, volume which is much lower in the case of the sample obtained in a single step than by a multi-step MS-GO-C-300/1000.

The suspension of the sample in DMSO is not as homogeneous as MS-GO-C-300/1000 and it precipitates even after 5 min (Figure 2 left sample in both pictures). The SBET surface area calculated for SS-GO-C-1000 is ≈100 m²g⁻¹(Table 1), much less than that obtained for MS-GO-C-300/1000.

The C/O ratio, calculated by elemental analysis (Table 1) is 69, in the range of the expected for thermally treated samples at 1000°C. This value is a bit larger that for the sample obtained by a multiple-step.

The above results demonstrate the validity of the hypothesis that a multi-step procedure up to the same final temperature led to a reduced graphene with modified characteristics. Particularly a more stable suspension is obtained and the sample exhibit and enhanced SBET surface area. The reduction of the sample, although a bit larger in the case of the multi-step procedure, is in the range expected.

### Example 3 (according to the invention): Preparation of graphene from petrochemical graphite with a first flash thermal treatment at 460°C and a second thermal treatment at 700°C (MS-GO-P-460/700)

### Preparation of MS-GO-P-460/700

MS-GO-P-460/700 was prepared by using as starting material a graphite oxide (GO-P) prepared by oxidation, using the Hummers method described in example 1, of a graphite, which itself was obtained by graphitization at 2800°C of a petroleum coke. In a first step of flash thermal treatment, 0.3 g of GO-P were introduced in an oven having a volume of 25 cm³ previously heated at 460°C under an atmosphere of N₂ (100 mL min⁻¹). The sample was then cooled to room temperature. In a second step of thermal treatment the sample previously obtained was introduced in an oven and heated up to 700°C under an atmosphere of Ar (3 Lmin⁻¹) at a heating rate of 5°C min⁻¹, the sample being kept at this temperature for 1 h. The sample so obtained was labeled as MS-GO-P-460/700

### Characterization of MS-GO-P-460/700

The obtained sample exhibits a fluffy appearance (Figure 1b right). The suspension of MS-GO-P-460/700 in DMSO is homogeneous and stable after 5 min (Figure 2b right). The SBET surface area calculated for this sample was ≈530 m²g⁻¹(Table 1). The C/O ratio is 16.3 (Table 1), in the range of the samples thermally treated at 700°C, but with a very high SBET and excellent stability in dispersion.

### Example 4 (comparative): Preparation of graphene from petrochemical graphite by a single-step thermal treatment at 700°C with heating rate of 5°C/min (SS-GO-P-700)

### Preparation of SS-GO-P-700

SS-GO-P-700 was prepared by using as starting material the graphite oxide (GO-P) prepared in example 3. GO-P was thermally treated in an oven and heated up to 700°C under an atmosphere of Ar (3 L min⁻¹) at a heating rate of 5°C min⁻¹, the sample being kept at this temperature for 1 h. The sample was labeled as SS-GO-P-700.

### Characterization of SS-GO-P-700

SS-GO-P-700 (Figure 1b, middle) exhibits an appearance completely different from MS-GO-C-460/700. The image illustrates the volume occupied for 22.5 mg of each sample, volume which is visually much lower in the case of the sample obtained in a single step (SS-GO-P-700) than in the multi-step MS-GO-C-460/700. The suspension of the sample in DMSO is not as homogeneous as MS-GO-P-460/700 and it precipitates even after 5 min (Figure 2b, middle). The SBET surface area calculated for SS-GO-P-700 is ≈210 m²g⁻¹, much less than the obtained for MS-GO-P-460-700 (530 m²g⁻¹)._The C/O ratio is 15 (Table 1), in the range of the samples thermally treated at 700°C as MS-GO-C-460/700.

From the results showed in examples 3 and 4 it can be seen that the process of the invention leads to a reduced graphene forming more stable suspensions and having larger SBET surface area.

We also demonstrate that the initial temperature of the initial thermal treatment can be modified to certain point to control de SBET surface area obtained.

### Example 5: (comparative): Preparation of graphene from petrochemical graphite by a first thermal treatment with ramp of 5°C/min up to 460°C, cooling to 300°C, and a second thermal treatment up to 700°C with ramp of 5°C/min (pseudoMS-GO-P-460ramp/700):

### Preparation of pseudoMS-GO-P-460ramp/700

pseudoMS-GO-P-460ramp/700 was prepared by using as starting material the graphite oxide (GO-P) prepared in example 3. GO-P was thermally treated in an oven and heated up to 460°C under an atmosphere of Ar (3 L min⁻¹) at a heating rate of 5°C min⁻¹._The sample was then cooled to room temperature. In a second step of thermal treatment the sample previously obtained was introduced in an oven and heated up to 700°C under an atmosphere of N₂ (3 L/min) at a heating rate of 5°C/min, the sample being kept at this temperature for 1 h.

### Characterization of pseudoMS-GO-P-460ramp/700

pseudoMS-GO-P-460ramp/700 (Figure 1b, left) exhibits an appearance completely different from MS-GO-C-460/700 and similar to that of SS-GO-P-700. The image illustrates the volume occupied for 22.5 mg of each sample, volume which is much lower than in the multi-step MS-GO-C-460/700. The suspension stability of the sample in DMSO is also similar to that of SS-GO-P-700 (Figure 2b left), as well as its C/O ratio (15, Table 1) and SBET surface area calculated ≈200 m²g⁻¹(Table 1), much less than the obtained for MS-GO-P-460-700 (530 m²g⁻¹).

It can thus be seen that the multi-step procedure of the invention comprising an initial flash pyrolysis step) leads to graphenes with improved characteristics.

### Example 6 (according to the invention): Preparation of graphene from petrochemical graphite with a first flash thermal treatment at 300°C and a second thermal treatment at 700°C (MS-GO-P-300/700)

### Preparation of MS-GO-P-300/700

MS-GO-P-300/700 was prepared by using as starting material the graphite oxide (GO-P) prepared in example 3. In a first step of flash thermal treatment, 0.3 g of GO-P were introduced in an oven having a volume of 25 cm³ previously heated at 300°C under an atmosphere of N₂ (100 mL min⁻¹). The sample was then cooled to room temperature. In a second step of thermal treatment the sample previously obtained was introduced in an oven and heated up to 700°C under an atmosphere of Ar (3 L min⁻¹) at a heating rate of 5°C min⁻¹, the sample being kept at this temperature for 1 h. The sample so obtained was labeled as MS-GO-P-300/700.

### Characterization of MS-GO-P-300/700

The obtained sample exhibits a fluffy appearance (Figure 1c right). The suspension of MS-GO-P-300/700 in DMSO is homogeneous and stable after 5 min, although less than MS-GO-P-460/700 (example 3)(Figure 2c right). The SBET surface area calculated for this sample was ≈270 m²g⁻¹ (Table 1). This value is lower than that of MS-GO-P-460/700. The C/O ratio however is 13 (Table 1), in the range of MS-GO-P-460/700. Again the process according to the invention leads to graphene with improved SBET, controlled oxygen content and excellent dispersion stability and processability.

### Example 7 (according to the invention): Preparation of graphene from petrochemical graphite with a first flash thermal treatment at 400°C and a second thermal treatment at 700°C (MS-GO-P-400/700)

### Preparation of MS-GO-P-400/700

MS-GO-P-400/700 was prepared by using as starting material the graphite oxide (GO-P) prepared in example 3. In a first step of flash thermal treatment, 0.3 g of GO-P were introduced in an oven having a volume of 25 cm³ previously heated at 400°C under an atmosphere of N₂ (100 mL min⁻¹). The sample was then cooled to room temperature. In a second step of thermal treatment the sample previously obtained was introduced in an oven and heated up to 700°C under an atmosphere of Ar (3 L min⁻¹) at a heating rate of 5°C min⁻¹, the sample being kept at this temperature for 1 h. The sample so obtained was labeled as MS-GO-P-400/700

### Characterization of MS-GO-P-400/700

The obtained sample exhibits a fluffy appearance (Figure 1c left). The suspension of MS-GO-P-400/700 in DMSO is homogeneous and stable after 5 min, similar to MS-GO-P-460/700 (example 3) (Figure 2c left). The SBET surface area calculated for this sample was ≈450 m²g⁻¹ (Table 1). This value is lower than that of MS-GO-P-460/700 (experiment 3). The C/O ratio however is 15 (Table 1), in the range of MS-GO-P-460/700. Comparing experiments 3, 6 and 7 we confirm that the contribution of the initial flash pyrolysis steps to the final surface area is crucial, while the second step is required to control this surface area as well as to achieve the desired reduction degree. The process according to the invention again leads to graphene with improved SBET, controlled oxygen content and excellent dispersion stability and processability.

### Example 8 (according to the invention): Preparation of graphene from synthetic graphite with a first flash thermal treatment at 300°C and a second thermal treatment at 1000°C (MS-GO-S-300/1000)

### Preparation of MS-GO-S-300/1000

MS-GO-S-300/1000 was prepared by using as starting material a graphite oxide (GO-S) prepared from a synthetic graphite, using the Hummers method described in example 1. In a first step of flash thermal treatment, 0.3 g of GO-S was introduced in an oven having a volume of 25 cm³ previously heated at 300°C under an atmosphere of N₂ (100 mL min-1). The sample was then cooled to room temperature. In a second step of thermal treatment the sample previously obtained was introduced in an oven and heated up to 1000°C under an atmosphere of Ar (3 L min⁻¹) at a heating rate of 5°C min⁻¹, the sample being kept at this temperature for 1 h. The sample so obtained was labeled as MS-GO-S-300/1000

### Characterization of MS-GO-S-300/1000

The obtained sample exhibits a fluffy appearance (Figure 1d right). The suspension of MS-GO-S-300/1000 in DMSO is homogeneous and stable after 5 min (Figure 2d right). The C/O ratio calculated for this sample is 163 (Table 1), similar to other samples heated at this temperature. The SBET surface area calculated for this sample was ≈530 m²g⁻¹ (Table 1).

### Example 9 (comparative): Preparation of graphene from synthetic graphite by a single-step thermal treatment at 1000°C with heating rate of 5°C/min (SS-GO-S-1000)

### Preparation of SS-GO-S-1000

SS-GO-S-1000 was prepared by using as starting material the graphite oxide (GO-S) prepared in example 8. GO-S was thermally treated in an oven and heated to 1000°C under an atmosphere of Ar (3 L min⁻¹) at a heating rate of 5°C min⁻¹, the sample being kept at this temperature for 1 h. The sample was labelled as SS-GO-S-1000.

### Characterization of SS-GO-S-1000

SS-GO-S-1000 (Figure 1d, left) exhibits an appearance completely different form MS-GO-S-300/1000. The image illustrates the volume occupied for 22.5 mg of each sample, volume which is much larger in the case of the sample obtained in a single step by a multi-step MS-GO-S-300/1000. The C/O ratio for this sample is 159 (Table 1). The SBET surface area calculated for SS-GO-S-1000 is ≈ 270 m²g⁻¹, Table 1, much less than that obtained for MS-GO-S-300/1000 (530 m²g⁻¹, Table 1). The suspension of the sample SS-GO-S-1000 in DMSO is not as homogeneous as MS-GO-S-300/1000 and it precipitates even after 5 min (Figure 2d left).

### Example 10 (according to the invention): Preparation of graphene from synthetic graphite with a first flash thermal treatment at 400°C and a second thermal treatment at 1000°C (MS-GO-S-400/1000)

### Preparation of MS-GO-S-400/1000

MS-GO-S-400/1000 was prepared by using as starting material a graphite oxide (GO-S) prepared from a synthetic graphite, using the Hummers method described in example 1. In a first step of flash thermal treatment, 0.3 g of GO-S was introduced in an oven having a volume of 25 cm³ previously heated at 400°C under an atmosphere of N₂ (100 mL min-1). The sample was then cooled to room temperature. In a second step of thermal treatment the sample previously obtained was introduced in an oven and heated up to 1000°C under an atmosphere of Ar (3 L min⁻¹) at a heating rate of 5°C min⁻¹, the sample being kept at this temperature for 1 h. The sample so obtained was labeled as MS-GO-S-400/1000

### Characterization of MS-GO-S-400/1000

The obtained sample exhibits a fluffy appearance. The suspension of MS-GO-S-400/1000 in DMSO is homogeneous and stable after 5 min. The C/O ratio calculated for this sample is 129 (Table 1), similar to other samples heated at this temperature. The SBET surface area calculated for this sample was ≈ 355 m²g⁻¹ (Table 1).

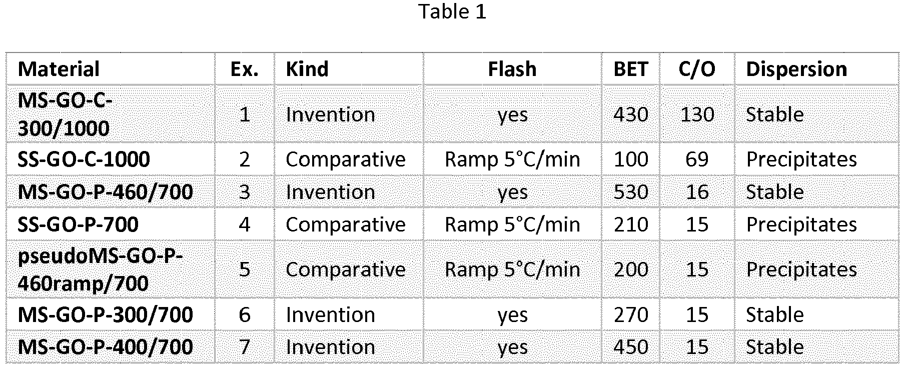

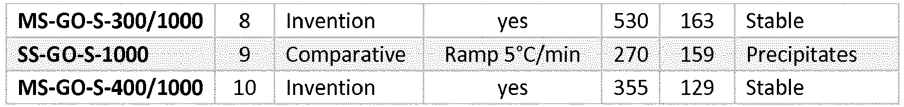

## Claims

1. Process for the preparation of graphene which comprises the following steps:
a) flash thermal treatment under inert atmosphere of a graphite oxide at a temperature up to 700°C sufficient to produce exfoliation;
b) cooling the material obtained in the previous step below 90°C; and
c) heating the material resulting from the previous step under inert atmosphere at a temperature which is higher than the temperature of step a), wherein the heating rate is between 1 and 15°C/min.

2. The process for the preparation of graphene according to claim 1, wherein the heating ramp is between 2 and 10°C/min.

3. The process for the preparation of graphene according to any of claims 1 or 2, wherein the material is cooled in step b) at a temperature below 40°C.

4. The process for the preparation of graphene according to claims 1, 2 or 3, which comprises the following steps:
a) flash thermal treatment under inert atmosphere of a graphite oxide at a temperature comprised between 90°C and up to 700°C sufficient to produce exfoliation;
b) cooling the material obtained in the previous step below 40°C;
c) heating the material obtained in the previous step above 700°C and up 3000°C at a graphene oxide reducing temperature under inert atmosphere at a heating rate between 2 and 10°C/min.

5. Process for the preparation of graphene according to any one of claims 1 to 4, wherein flash thermal treatment is carried out at a temperature greater than 90°C.

6. Process for the preparation of graphene according to claim 5, wherein flash thermal treatment is carried out at a temperature between 300 and 600°C.

7. Process for the preparation of graphene according to any one of claims 2 to 6, wherein cooling in step b) is carried out down to ambient temperature.

8. Process for the preparation of graphene according to any one of claims 1 to 7, wherein step c) is carried out at a temperature comprised between 800°C and 2,800°C.

9. Process for the preparation of graphene according to any of claims 1 to 7, wherein step c) is carried out at a temperature comprised between 400°C and 1200°C.

10. Process for the preparation of graphene according to any one of claims 1 to 9, wherein the graphite oxide is prepared from graphite by oxidation.

11. Process for the preparation of graphene according to claim 10, wherein graphite is obtained from coke by graphitization.

12. Process for the preparation of graphene according to any one of claims 1 to 11, wherein the reactor volume/graphene mass is 20-100 cm³/g.

## Patentansprüche

1. Verfahren zur Herstellung von Graphen, umfassend die folgenden Schritte:
a) Kurzzeit-Erhitzung eines Graphitoxides unter Inertatmosphäre bei einer für eine Abschälung ausreichenden Temperatur bis zu 700°C;
b) Abkühlung des aus dem vorangegangen Schritt erhaltenen Materials unter 90°C; und
c) Aufheizung des aus dem vorangegangenen Schritt erhaltenen Materials unter Inertatmosphäre auf eine Temperatur, die höher ist als die Temperatur aus Schritt a), wobei die Heizrate zwischen 1 und 15K/min liegt.

2. Verfahren zur Herstellung von Graphen nach Anspruch 1, wobei die Heizrate zwischen 2 und 10K/min liegt.

3. Verfahren zur Herstellung von Graphen nach einem der Ansprüche 1 oder 2, wobei das Material in Schritt b) auf eine Temperatur von unter 40°C gekühlt wird.

4. Verfahren zur Herstellung von Graphen von einem der Ansprüche 1, 2 oder 3, umfassen die folgenden Schritte:
a) Kurzzeit-Erhitzung eines Graphitoxides unter Inertatmosphäre auf eine Temperatur zwischen 90°C und 700°C, die für ein Abschälen ausreichend ist;
b) Abkühlung des aus dem vorherigen Schritt erhaltenen Materials unter 40°C;
c) Aufheizen des im vorherigen Schritt erhaltenen Materials unter Inertatmosphäre auf eine Graphenoxid-Reduktions-Temperatur zwischen 700°C und 3000°C mit einer Heizrate zwischen 2 und 10K/min.

5. Verfahren zur Herstellung von Graphen nach einem der vorangehenden Ansprüche 1 bis 4, wobei die Kurzzeit-Erhitzung bei einer Temperatur größer als 90°C erfolgt.

6. Verfahren zur Herstellung von Graphen nach Anspruch 5, wobei die Kurzzeit-Erhitzung bei einer Temperatur zwischen 300 und 600°C erfolgt.

7. Verfahren zur Herstellung von Graphen in einem der Ansprüche 2 bis 6, wobei die Kühlung in Schritt b) bis herunter zur Umgebungstemperatur erfolgt.

8. Verfahren zur Herstellung von Graphen nach einem der Ansprüche 1 bis 7, wobei der Schritt c) bei einer Temperatur zwischen 800°C und 2800°C durchgeführt wird.

9. Verfahren zur Herstellung von Graphen von einem der Ansprüche 1 bis 7, wobei der Schritt c) bei einer Temperatur zwischen 400°C und 1200°C durchgeführt wird.

10. Verfahren zur Herstellung von Graphen nach einem der Ansprüche 1 bis 9, wobei das Graphitoxid aus Graphit mittels Oxidation gewonnen wird.

11. Verfahren zur Herstellung von Graphen nach Anspruch 10, wobei das Graphit aus Koks durch Graphitierung gewonnen wird.

12. Verfahren zur Herstellung von Graphen nach einem der Ansprüche 1 bis 11, wobei das Reaktorvolumen/die Masse des Graphen 20-100cm³/g beträgt.

## Revendications

1. Procédé de préparation de graphène qui comprend les étapes suivantes :
a) un traitement thermique éclair sous atmosphère inerte d'un oxyde de graphite à une température allant jusqu'à 700°C suffisante pour produire une exfoliation ;
b) un refroidissement du matériau obtenu à l'étape précédente en dessous de 90°C ; et
c) un chauffage du matériau résultant de l'étape précédente sous atmosphère inerte à une température qui est supérieure à la température de l'étape a), où la vitesse de chauffage est comprise entre 1 et 15°C/min.

2. Procédé de préparation de graphène selon la revendication 1, dans lequel la rampe de chauffage est comprise entre 2 et 10°C/min.

3. Procédé de préparation de graphène selon l'une des revendications 1 et 2, dans lequel le matériau est refroidi à l'étape b) à une température en dessous de 40°C.

4. Procédé de préparation de graphène selon la revendication 1, 2 ou 3, qui comprend les étapes suivantes :
a) un traitement thermique éclair sous atmosphère inerte d'un oxyde de graphite à une température comprise entre 90°C et jusqu'à 700°C suffisante pour produire une exfoliation ;
b) un refroidissement du matériau obtenu à l'étape précédente en dessous de 40°C ;
c) un chauffage du matériau obtenu à l'étape précédente au-dessus de 700°C et jusqu'à 3000°C à une température de réduction d'oxyde de graphène sous atmosphère inerte à une vitesse de chauffage comprise entre 2 et 10°C/min.

5. Procédé de préparation de graphène selon l'une quelconque des revendications 1 à 4, dans lequel le traitement thermique éclair est réalisé à une température supérieure à 90°C.

6. Procédé de préparation de graphène selon la revendication 5, dans lequel le traitement thermique éclair est réalisé à une température comprise entre 300 et 600°C.

7. Procédé de préparation de graphène selon l'une quelconque des revendications 2 à 6, dans lequel le refroidissement à l'étape b) est réalisé jusqu'à atteindre la température ambiante.

8. Procédé de préparation de graphène selon l'une quelconque des revendications 1 à 7, dans lequel l'étape c) est réalisée à une température comprise entre 800°C et 2800°C.

9. Procédé de préparation de graphène selon l'une des revendications 1 à 7, dans lequel l'étape c) est réalisée à une température comprise entre 400°C et 1200°C.

10. Procédé de préparation de graphène selon l'une quelconque des revendications 1 à 9, dans lequel l'oxyde de graphite est préparé à partir du graphite par oxydation.

11. Procédé de préparation de graphène selon la revendication 10, dans lequel le graphite est obtenu à partir du coke par graphitisation.

12. Procédé de préparation de graphène selon l'une quelconque des revendications 1 à 11, dans lequel le volume de réacteur/masse de graphène est compris entre 20 et 100 cm³/g.
